Europäisches Patentamt

European Patent Office

Office européen des brevets

(19)

(11) **EP 1 547 753 A1**

(12) **EUROPEAN PATENT APPLICATION**

(43) Date of publication:
**29.06.2005 Bulletin 2005/26**

(51) Int Cl.[7]: **B29C 53/08**, B29C 70/52,
B29C 70/46, B29C 70/34

(21) Application number: **04026015.0**

(22) Date of filing: **03.11.2004**

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(30) Priority: **26.12.2003 JP 2003433886**

(71) Applicant: **JAMCO CORPORATION
Mitaka, Tokyo (JP)**

(72) Inventors:
• **Okamoto, Makoto, c/o Jamco Corp.
Tokyo (JP)**
• **Kuriyama, Shuntaro, c/o Jamco Corp.
Tokyo (JP)**

(74) Representative:
**TER MEER STEINMEISTER & PARTNER GbR
Artur-Ladebeck-Strasse 51
33617 Bielefeld (DE)**

(54) **Method and apparatus for molding thermosetting composite material**

(57)     The invention provides a means for molding a prepreg material with a curved surface formed by impregnating carbon fiber or glass fiber with thermosetting resin. A prepreg sheet 100 is shaped into an L-shape, and an L-shape preformed channel member 120 is molded via a hot press unit 210 and a cold press unit 220. The curing rate of the perform is 30 to 60 %. The preform 120 is molded into a curved member having a radius of curvature $R_1$ in a secondary molding apparatus 300, which is then cut to form channel members 30. The curing rate thereof is 60 to 80 %. Then, these channel members 30 used as reinforcements of a plate member are completely cured in an autoclave to form the molded product.

# FIG.1

**Description**

The present application is based on and claims priority of Japanese patent application No. 2003-433888 filed on December 26, 2003, the entire contents of which are hereby incorporated by reference.

BACKGROUND OF THE INVENTION

Field of the invention

The present invention relates to a method and apparatus for molding a thermosetting composite material used for example for forming aircrafts and vehicles.

Description of the related art

Aircrafts have many curved surfaces in the main portions of the airframe including the body, the main plane and the tail plane in order to enhance the performance of the airframe, and the aircrafts adopt a semimonocoque construction in which beams and skin layers are assembled together. Along with the growth in size of the aircrafts, it has become essential to reduce the weight of the airframe, so during the recent years, the use of composite materials containing reinforced fiber such as carbon fiber have increased.

The preferred main material for forming a primary structure is a combination of carbon fiber - epoxy resin (having thermosetting property) that satisfies the required performance, which in many cases is processed in the form of a prepreg to assure stability of quality.

According to the conventional molding method, prepregs or other materials are layered in a mold, which are then vacuumed, heated and pressed in an autoclave (pressure vessel).

This conventional method can be applied in the following ways, for example, to form a main plane of an aircraft.

1. All prepreg materials are layered and then subjected to integral molding.
2. Beams formed in advance are attached via adhesive films to the prepregs that constitute the skin layer of the main plane, and then subjected to integral molding.
3. Beams are preformed (but not completely cured) in advance, which are then subjected to integral molding with the prepregs that constitute the skin layer of the main plane.

According to above method 1, the prepregs are softened when heat is applied thereto, so the method requires molds to be disposed at both the upper surface and the lower surface of the prepregs that have high accuracy and that can apply pressure evenly to the layered prepregs. As for methods 2 and 3, it is sufficient to dispose a rubber-like mold to correspond to the upper surface of the prepregs, but these methods require a separate mold for forming the beams.

A method for continuously molding a prepreg material is proposed by the present applicant and disclosed in the patent document mentioned below. By changing a portion of this molding apparatus, it is possible to control the curing reaction of the prepreg. The general outline of the apparatus will be described using an L-shaped member as an example. The prepreg materials cut into slits having predetermined widths are set to required number of rolls, and after layering a predetermined number of prepreg sheets, release films are disposed on the upper and lower surfaces of the layered sheets. Next, the prepreg with release films disposed on the upper and lower surfaces thereof is deformed gradually into an L-shape, and then pulled into a hot-press which is heated to a fixed temperature. The hot-press is interlocked with a puller mentioned in detail later, and pulls in a predetermined amount of prepreg when it is opened. The curing reaction of the laminated prepreg progresses as the prepreg passes through the hot-press, and the air between the layers are pushed out so that the prepreg is formed into a shape close to its final form. A device for cooling the prepreg is disposed directly after the hot-press, in which the prepreg is cooled and further curing reaction is suppressed. A puller for pulling the prepreg is disposed directly after the cooling device, which controls the time and the amount of pulling the prepreg per one process cycle with respect to the temperature of the hot-press so that a predetermined amount of heat is constantly provided to the prepreg. The prepreg being pulled out by the puller is cut into predetermined lengths.

The prepreg having passed through the aforementioned processes is formed into a shape close to its final form, and the curing reaction thereof is progressed to a certain extent, but by returning the prepreg to room temperature, further reaction is stopped (this prepreg is hereinafter referred to as preform).

The preform being cut to predetermined lengths is then deformed into desired shapes by either of the two following methods.

(1) The preform having either a portion or an entirety of its body heated for a predetermined time at a predetermined temperature by an infrared heater or an oven is placed in a hot-press having been heated to a predetermined temperature, where it is subjected to pressurization. After a predetermined time has passed, the preform formed into a desired shape is taken out.
(2) The press is equipped with a heating unit and a cooling unit, in which the preform is gradually moved and subjected to pressurization so as to be deformed into the desired shape.

The deformed preform is then set together with a prepreg serving as the skin layer, and after further setting a release film, an upper rubber mold, a vacuum film and so on, the set preform is subjected to vacuuming and integral molding in an autoclave.

[Patent Reference 1] Japanese Patent No. 1886560
[Patent Reference 2] Japanese Patent No. 3012847

## SUMMARY OF THE INVENTION

The present invention provides a method and an apparatus for molding a composite material that is capable of saving work for prepreg lamination, cutting down other materials used for autoclave molding and reducing the number of required molds, by continuously molding a beam member while controlling the curing rate of the prepreg, and by subjecting the beam member having been deformed into the desired shape to integral molding with a skin layer.

The method for molding a thermosetting composite material which is a prepreg material formed by impregnating a carbon fiber or a glass fiber with thermosetting resin and semi-curing the same includes continuously layering sheet-shaped prepreg materials and forming the same into a desired shape; and heating the formed prepreg material in a mold for a predetermined time and controlling a curing rate F of the prepreg material so as to mold a linear-shaped preform.

Here, curing rate F can be defined by the following equation:

$$F = [\,(B-A)\,/B] \times 100\ (\%)\,,$$

wherein A represents the heat quantity generated before the prepreg material of the current status is completely cured, and B represents the heat quantity generated before a semi-cured prepreg material is completely cured.

Further, the method includes cutting the preform into a predetermined length; and deforming a part or an entirety of the preform cut into the predetermined length using a hot press while controlling the curing rate thereof.

The present invention is also capable of molding a product having a curved surface by attaching a molded product to a sheet-shaped prepreg material.

Moreover, the present invention provides a molding apparatus for a thermosetting composite material in which a preform of a prepreg material molded linearly is molded into a curved shape, the apparatus comprising: a hot press unit having a mold with a curvature; a cold press unit having a mold with a curvature disposed immediately subsequent to the hot press unit; and a feeder for feeding the mold along the curvature.

The present invention enables to form the outer panel of an aircraft formed of curved surfaces or the like using a thermosetting composite material.

## BRIEF DESCRIPTION OF THE DRAWINGS

FIG. 1 shows a composite material product manufactured according to the present invention;
FIG. 2 is an explanatory view of the method of molding a thermosetting composite material according to the present invention;
FIG. 3 is an explanatory view of the molding apparatus of the thermosetting composite material according to the present invention;
FIG. 4 is an explanatory view of the molding apparatus of the thermosetting composite material according to the present invention;
FIG. 5 shows a timing chart of a molding apparatus of the thermosetting composite material according to the present invention; and
FIG. 6 is an explanatory view showing the molding of a product using an autoclave.

## DETAILED DESCRIPTION OF THE PREFERRED EMBODIMENTS

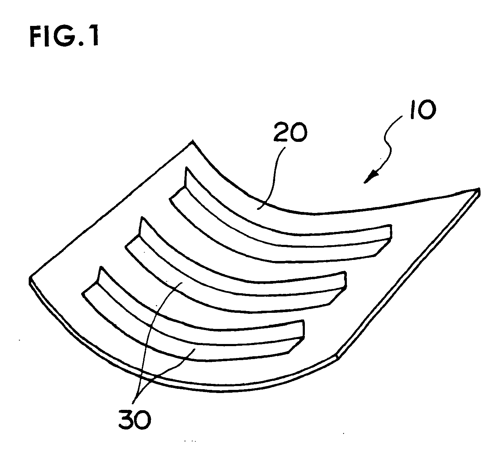

FIG. 1 shows an external view of a product manufactured according to the method for molding a thermosetting composite material according to the present invention.

Product 10 is a structural member of an aircraft, for example, wherein channel members 30 for reinforcement made of thermosetting composite material are integrally attached to the inner side of a plate member 20 formed of thermosetting composite material.

This product comprises a curved surface, and can be applied as an outer panel of an aircraft.

The plate member 20 can be formed by mounting a material on a mold member corresponding to the desired curved surface and molding the same in an autoclave or other devices, but the channel member 30 cannot be molded to have the desired curved shape by the same process as forming the plate member 20.

The present invention provides a method and apparatus for molding the channel member with a curvature in advance.

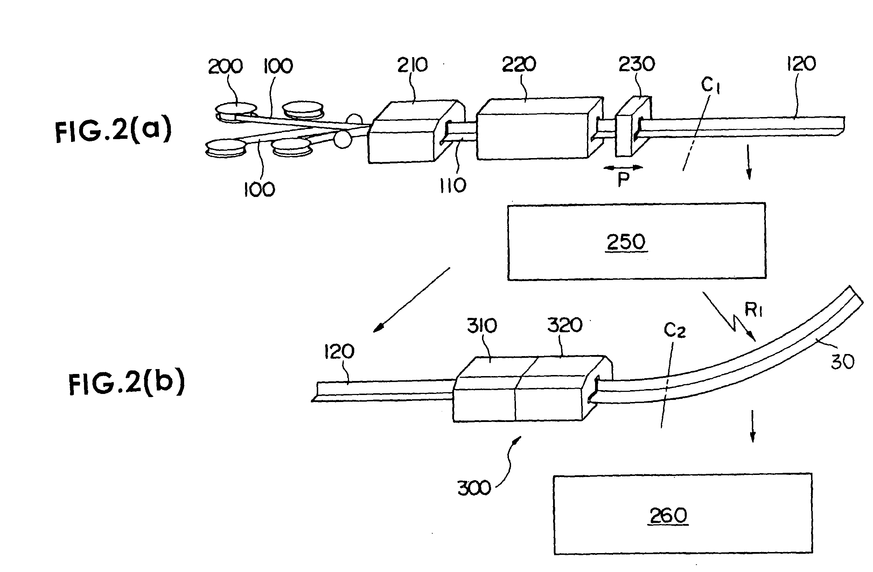

FIG. 2 is an explanatory view showing the method for molding the thermosetting composite material according to the present invention.

FIG. 2(a) illustrates a primary molding process of the thermosetting composite material. A strip-shaped prepreg member 100 is pulled out from a prepreg roll 200, and a required number of prepreg members are layered. The layered prepreg sheets are formed into an L-shaped sheet in a hot press unit 210. The formed sheet is cooled in a cooling unit 220 to stop the progression of thermosetting. This forming sequence is performed while moving the whole prepreg sheet in steps using a puller 230 that moves back and forth in the direction of arrow P.

The linear L-shaped channel member 120 having been subj ected to primary molding is then cut into predetermined lengths by a cutting means $C_1$, and stored in a freezer 250.

The curing rate of this primary-molded preform is 40 to 60 %.

The mold temperature of the hot press unit is 170 °C.

FIG. 2(b) illustrates a secondary molding process.

The long channel member 120 is bent in a secondary molding device 300 to have a radius of curvature $R_1$. The radius of curvature $R_1$ can be, for example, as large as 3 m.

The secondary molding device 300 includes a hot press unit 310 and a coldpress unit 320, and continuously molds the straight channel member 120 into an arc. The continuously molded channel member is cut into predetermined lengths by a cutting means $C_2$, so as to form the L-shaped channel members 30 used for reinforcement of the product 10.

If necessary, the L-shaped channel members 30 are stored in a freezer 260. The curing rate of the molded L-shaped channel member 30 is around 60 to 80 %.

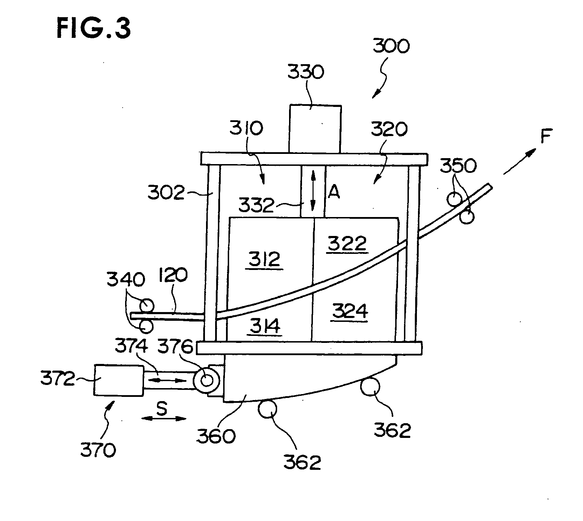

FIG. 3 is an explanatory view showing the structure of the secondary molding device.

The secondary molding device, the entire body of which is denoted by reference number 300, comprises a hot press unit 310 and a cold press unit 320 equipped inside a frame 302.

The hot press unit 310 comprises a fixed mold 314 and a movable mold 312, and the movable mold 312 can be moved toward and away from the fixed mold 314 via the movement of a rod 332 in the direction of arrow A driven by a cylinder 330.

The movable mold 312 and the fixed mold 314 of the hot press unit 310 are equipped with electrical or other heating means, and carries out the molding process by adding heat and pressure to the primary molded channel member 120 being supplied thereto.

The cold press unit 320 comprises a fixed mold 324 and a movable mold 322, and the movable mold 322 can be moved toward and away from the fixed mold 324 via the movement of the rod 332 in the direction of arrow A driven by the cylinder 330.

The movable mold 322 and the fixed mold 324 of the cold press unit 320 are equipped with a cooling means, so as to cool the molded channel member to stop the progress of the thermosetting process.

The channel member 120 passing through the secondary molding device 120 is held between pinch rollers 340, 350 and sent toward the direction of arrow F.

A cam plate 360 is attached beneath the frame 302 of the secondary molding device 300, and the cam plate 360 is supported via plural rollers 362.

A cylinder 372 of a feeder 370 of the mold comprises a rod 374 driven in the direction of arrow S, and the front end of a rod 374 is connected via a universal joint 376 to the cam plate 360.

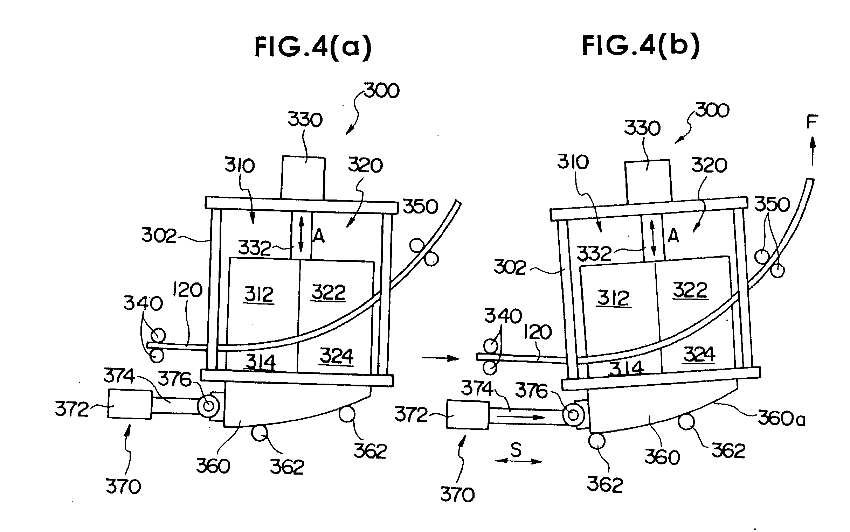

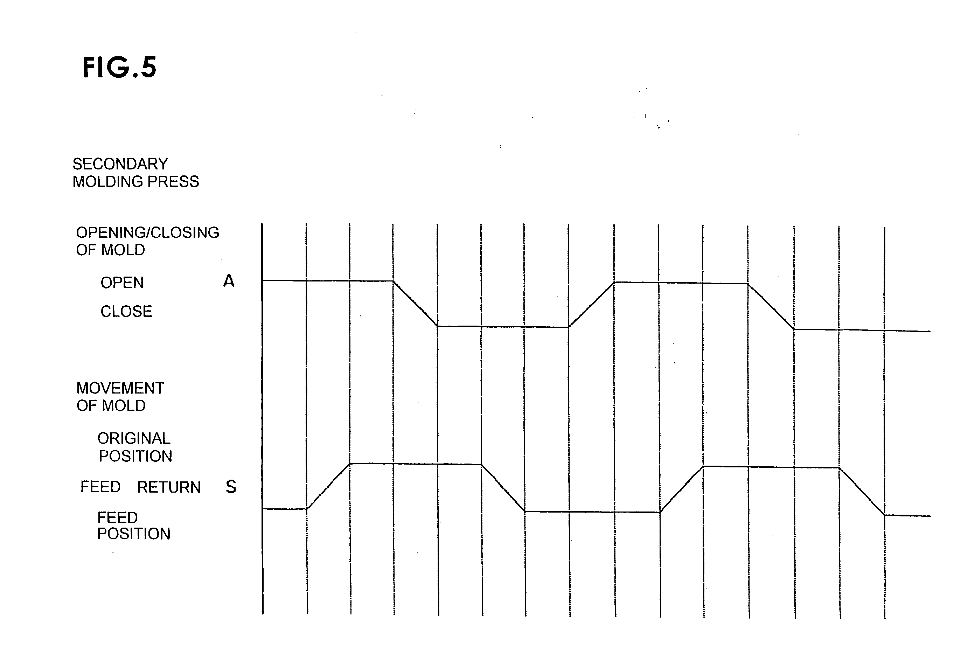

FIG. 4 is an explanatory view showing the operation of the secondary molding device 300, and FIG. 5 is a timing chart of the operation thereof.

While the molds of the hot press unit 310 and the cold press unit 320 are opened, the rod 374 of the feeder 370 is returned to its original position.

Then, the molds are closed to perform molding and cooling, and the rod 374 of the feeder 370 is elongated to move the entire bodyof the frame 302 including the molds in the forward direction. By the action of the cam plate 360, this forward movement is set to correspond to the radius of curvature of the L-shaped channel member subjected to secondary molding.

In other words, the cam profile 360a of the cam plate 360 has the same radius of curvature as that of the L-shaped channel member subjected to secondary molding.

After the termination of a pressing process which had been carried out for a predetermined amount of time, the molds are opened and the feeder is returned to its original position.

The above processes are repeatedly performed to form the secondary molded product.

According to the present embodiment, the radius of curvature is set to 3 m, and the mold temperature of the hot press unit is set between 160 and 180 °C.

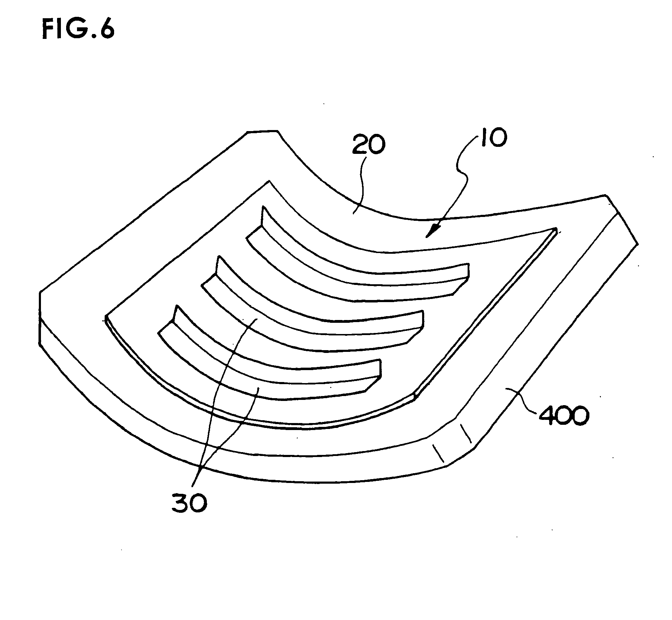

FIG. 6 shows the process of mounting the channel members 30 having been subjected to secondary molding according to the above-described method and having a curing rate of 60 to 80 % together with the prepreg sheet member 20 having the same curing rate onto a mold member 400, and heating the same in an autoclave to form the product 10.

In order to attach the product 10 which is not yet completely cured to the mold member 400, methods such as storing the entire body into an airtight bag and reducing the interior pressure of the bag to negative pressure so as to attach the product 10 to the mold member 400 or pressing the product 10 onto the mold member 400 using a press means are adopted.

According to either method, the channel members 30 subj ected to secondary molding and having a predetermined curvature are attached to the back side of the sheet member 20, which are subjected to thermosetting until its curing rate reaches 100 %, so as to form a composite material product having a predetermined curvature which is light weight and strong.

As described, the present invention enables to manufacture a structural member with a curved surface for an aircraft, a vehicle or the like, which is required to be light weight and strong.

## Claims

1. A method for molding a thermosetting composite material which is a prepreg material formed by impregnating carbon fiber or a glass fiber with thermosetting resin and semi-curing the same, the method comprising:

> continuously layering sheet-shaped prepreg materials and forming the same into a desired shape; and
> heating the formed prepreg material in a mold for a predetermined time and controlling a curing rate of the prepreg material so as to mold a linear-shaped preform.

2. The method for molding a thermosetting composite material according to claim 1, further comprising:

> cutting the preform into a predetermined length; and
> deforming a part or an entirety of the preform cut into the predetermined length using a hot press while controlling the curing rate thereof.

3. A method for molding a thermosetting composite material by attaching a molded product formed according to the method of claim 2 to a sheet-shaped prepreg material, so as to mold a product having a curved surface.

4. The method for molding a thermosetting composite material according to claim 1, wherein said curing rate is 30 to 60 %.

5. The method for molding a thermosetting composite material according to claim 2, wherein said curing rate is 60 to 80 %.

6. A molding apparatus for a thermosetting composite material in which a preform of a prepreg material molded linearly is molded into a curved shape, the apparatus comprising:

> a hot press unit having a mold with a curvature;
> a cold press unit having a mold with a curvature disposed immediately subsequent to the hot press unit; and
> a feeder for feeding the mold along the curvature.

## FIG.1

FIG.2(a)

FIG.2(b)

# FIG.3

FIG.4(a)                    FIG.4(b)

EP 1 547 753 A1

# FIG.5

SECONDARY
MOLDING PRESS

OPENING/CLOSING
OF MOLD

OPEN      A

CLOSE

MOVEMENT
OF MOLD

ORIGINAL
POSITION

FEED   RETURN   S

FEED
POSITION

EP 1 547 753 A1

FIG.6

**European Patent Office**

## EUROPEAN SEARCH REPORT

Application Number

EP 04 02 6015

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| L,X | EP 1 116 575 A (JAMCO CORPORATION) 18 July 2001 (2001-07-18) | 1 | B29C53/08 B29C70/52 B29C70/46 B29C70/34 |
| A | * column 3, paragraph 10 - paragraph 14; figures 1-3 * * column 5, paragraph 34 * ----- | 2-6 | |
| A | FR 2 256 656 A (RENAULT ET PEUGEOT,FR) 25 July 1975 (1975-07-25) * claim 1; figures 4,5 * ----- | 1-6 | |
| A | EP 1 151 850 A (HONDA GIKEN KOGYO KABUSHIKI KAISHA) 7 November 2001 (2001-11-07) * column 3, paragraph 13 - column 5, paragraph 22 * * column 5, paragraph 26 - column 6, paragraph 27; figure 3 * * column 6, paragraph 28 - column 6, paragraph 30; figures 5-8 * * column 6, paragraph 31 - column 7; figure 9 * * column 8, paragraph 36 * ----- | 1-6 | |
| A | US 5 593 708 A (SCHULTE ET AL) 14 January 1997 (1997-01-14) * column 2, line 41 - column 3, line 14; figure 1 * ----- | 6 | |

TECHNICAL FIELDS SEARCHED (Int.Cl.7)

B29C

The present search report has been drawn up for all claims

| Place of search | Date of completion of the search | Examiner |
|---|---|---|
| The Hague | 23 March 2005 | Pierre, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**  EP 04 02 6015

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2005

| Patent document cited in search report | | Publication date | Patent family member(s) | | Publication date |
|---|---|---|---|---|---|
| EP 1116575 | A | 18-07-2001 | JP | 3400399 B2 | 28-04-2003 |
| | | | JP | 2001191418 A | 17-07-2001 |
| | | | EP | 1116575 A2 | 18-07-2001 |
| | | | US | 2001007684 A1 | 12-07-2001 |
| FR 2256656 | A | 25-07-1975 | FR | 2256656 A5 | 25-07-1975 |
| | | | DE | 2461706 A1 | 10-07-1975 |
| EP 1151850 | A | 07-11-2001 | JP | 2001315149 A | 13-11-2001 |
| | | | DE | 60101819 D1 | 26-02-2004 |
| | | | DE | 60101819 T2 | 01-07-2004 |
| | | | EP | 1151850 A2 | 07-11-2001 |
| | | | US | 2001035249 A1 | 01-11-2001 |
| US 5593708 | A | 14-01-1997 | US | 5407613 A | 18-04-1995 |

EPO FORM P0459

For more details about this annex : see Official Journal of the European Patent Office, No. 12/82